# EUROPEAN PATENT SPECIFICATION

(11) **EP 0 875 305 B1**
(45) Date of publication and mention of the grant of the patent: **07.11.2001**
(21) Application number: 97933698.9
(22) Date of filing: 31.07.1997
(51) Int. Cl.: B21C 47/24, B23K 37/04, B21B 15/00

(54) **METAL STRIP WELDING MACHINE, AND RELATED PROCESS**
MASCHINE ZUM SCHWEISSEN VON METALLBÄNDERN UND VERFAHREN DAZU
MACHINE A SOUDER DES BANDES METALLIQUES, ET PROCEDE CORRESPONDANT

(30) Priority: 02.08.1996 ES 9601739
(43) Date of publication of application: 04.11.1998
(73) Proprietor: EDT Ripoll a SF Foundation tambien conocida por Escola del Treball del Ripolles, Fundacio S.F., 17500 Ripoll (ES)
(72) Inventor: SOLER FONT, Eduardo, E-08006 Barcelona (ES)
(74) Representative: Curell Sunol, Jorge
(86) International application number: ES9700197
(87) International publication number: WO9805440

(56) References cited:
- GB-A- 1 236 639
- US-A- 2 078 365
- US-A- 3 257 060
- US-A- 3 458 103
- US-A- 3 510 045
- US-A- 5 169 051

## Description

The invention relates to a metal strip welding machine for welding the ends of said metal strips being unwound from coils, the purpose of the machine being to feed presses suitable for stamping metal parts from said metal strips.

There are to be found on the market and, therefore, may be deemed to be state of the art presses in which metal parts are stamped from a metal strip supplied in large coils which are placed in the corresponding mounts and which has one end inserted in the corresponding press and is fed therethrough until exhausted.

Such types of press, while being fully automatic in operation, are not prepared to be able to continue running when the strip from the roll and mount is exhausted, but must be stopped, even shortly before the strip becomes exhausted and must be left idling, without producing, until a new coil is mounted in the mount where the previous one was installed and the press must then be run slowly until it returns to normal operation after the end of the new strip has been inserted.

In a normal shift, these interruptions represent a considerable loss in the specific performance of the press which, when operating with quality strips, will hardly stop until it runs out of material.

The object of the present invention is to provide for the feed system of any stamping press a way for it never to stop working as a result of the exhaustion of the metal strip supplied by the corresponding coil.

Spanish patent application 9601740, in the name of Soler y Palau S.A., discloses a continuous press feed system, the purpose of which is, among others, to allow for an accumulation of material when the coil supplying the press becomes exhausted, thereby avoiding the press from running idle while awaiting a fresh supply.

The document US-A-2.078.365 describes a welding machine for welding the ends of metal strips, comprising: a frame; strip entraining means; strip shearing means; strip end blocking means and welding means for the strip ends, where the strip entraining means comprises: a first pair of opposite jaws for retentively trapping the strip; a first cylinder for moving one jaw of the first pair against the other jaw of the same pair; a second pair of opposite jaws for retentively trapping the strip; a second cylinder for moving one jaw of the second pair against the other jaw of the same pair; a column fixedly attached to each of the first and second cylinders; and a rack which engages with a pinion operated by suitable means for moving the first and second cylinders in a direction to feed the strips.

The purpose of the welding machine is to fill a gap between the metal strip accumulator feeding the press and the coil mount for the above mentioned purposes, with shearing means that provide very high shearing forces by a relative small hydraulic unit, that allow the use of a relatively small hydraulic unit and that enable a compact and space saving construction of the whole machine.

The welding machine according to the invention is characterised in that the strip entraining means comprises a third cylinder for moving the first and second cylinders in a direction to feed the strips forward, and in that the shearing means for the ends of the strips comprises: a fourth cylinder having a rod; a flat bar; at least one articulated parallelogram, having arms forming an upper apex, a lower apex and lateral apexes, the lower apex moving integrally with the rod and the upper apex being immovably attached to the flat bar; and a shear moving integrally with one of the lateral apexes and having a contour, where the fourth cylinder is associated with the frame through an appendix and a lever.

Further details and features will be disclosed in the following description, in which reference is made to the accompanying drawings.

Figure 1 is a front elevation view, partly in section, of the machine.

Figure 2 is a schematic view of the operating method of the machine and of the main elements thereof.

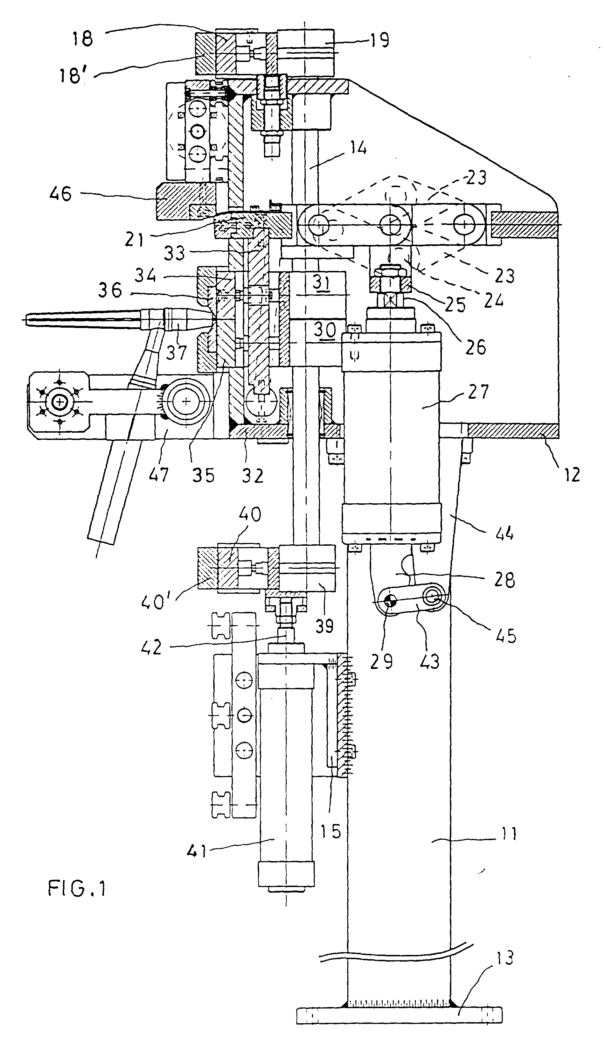

Figure 1 shows a frame 12 mounted on a stand 11, with the remaining main elements of the machine being mounted on the stand 11 and frame 12. The machine is attached to the floor by means of a horizontal plate 13 welded to the stand 11 or by another means.

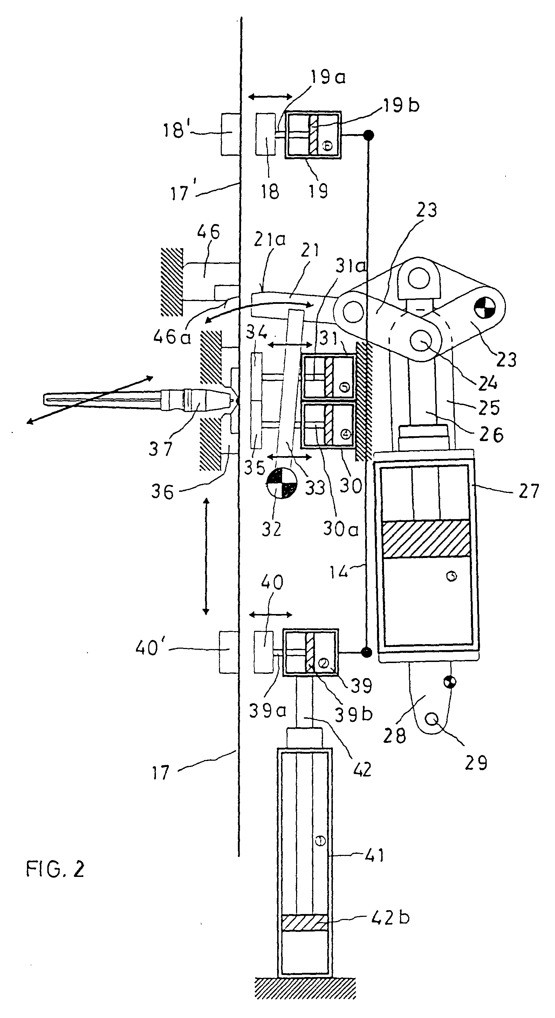

Figure 2 shows these main elements, which are formed by hydraulic or pneumatic cylinders 19, 27, 30, 31, 39 and 41 which, with their fittings allow: the entrainment of a strip 17; shearing of one end of the strip 17 with a shear 21, forming a clean cut edge; blocking of said cut end of said strip 17 by a clamp 35 and support 36; insertion of a new strip 17'; shearing of one end of said strip 17' with said shear 21, forming a clean cut edge; welding of said clean cut edges of said strips 17, 17' by a welding nozzle 37.

In one embodiment of the invention as may be seen in Figure 1, the machine is fabricated from a stand 11 formed by a metal section of any cross section which is fixedly attached to a flat plate 13 at the bottom end thereof by welding or by any other means.

On the stand 11, there is mounted the frame 12 with the stand 11 and the frame 12 supporting, between them, the main machine elements described hereinafter.

The machine, as said above, comprises cylinders 19 and 39 connected by a column 14, the configuration or section transversal of which may be circular or any other shape.

Since the cylinders 19 and 39 are connected by the column 14, they may move vertically up and down and vice versa with the aid of a further cylinder 41, mounted vertically by means of an angular support 15, the vertical portion of which is fixedly attached to the stand 11, while the cylinder 41, whose longitudinal axis 42 is parallel to the stand 11 is mounted on the horizontal portion thereof.

The machine is provided with shearing elements which are formed by a cylinder 27, the shaft 26 of which is jointed at the top end thereof to a compass or articulated parallelogram formed by four arms 23. The lower apex of the parallelogram is attached to the shaft 26, while the upper apex is fixed to the cylinder 27, thanks to the bar 25, so that the upper apex neither moves in respect to the cylinder 27 nor to the bar 25.

The cylinder 27, through the piston thereof, pushes the arms 23, it being the lower arms which, on being thrusted upwards and mutually pivoting about the shaft 24 push a shear 21 mounted on the left hand side apex of the parallelogram.

To assure the force transmitted by the parallelogram to the shear 21, it is associated with a swinging arm 33, having an axis of rotation 32.

Since the shear 21 describes a curved trajectory, the cylinder 27 also moves through an arc of a circle on being associated with the frame 12 through an appendix 44 and a lever 43, which is attached to the cylinder 27 by a flat bar 28, the flat bar 28 and the lever 43 being pin-jointed by the shaft 29, while the appendix 44 and the lever 43 are pin-jointed by a shaft 45. The action of the shear 21 when it rotates in the counter clockwise direction to shear the end of a strip 17 or 17' is complemented with an anvil 46 which has a contour 46a in the lower portion thereof mating with the external contour 21a of the shear 21, said anvil 46 being attached to the frame 12 by welding or any other means.

The welding means of the machine is formed by a welding nozzle 37 which may move horizontally for welding the ends of the strips 17, 17', and which is positioned perpendicular to said strips. The nozzle 37 is supported by a bar 47 which moves perpendicular to the strips, driven by a motor and linear movement mechanism, threaded rod or the like. Thus, the nozzle 37 moves along the joint between said sheets 17, 17', welding them together, as may be seen in Figure 1.

The end of said nozzle 37 is facing the contiguous ends of the sheet strips 17, 17' to be welded, which are held by clamps 34, 35.

The coils are unwound, as explained above, by the cylinders 19 and 39, which are provided in turn with a rod 19a and 39a, as well as the corresponding pistons 19b and 39b. The rods 19a and 39a are provided at the ends thereof with jaws 18 and 40 which are positioned opposite the jaws 18' and 40' in the working position thereof, both sets of jaws being provided with vertical movement in order to entrain the strip along when they are closed.

The operating cycle of the machine may be seen schematically in Figure 2. The two strips 17 and 17' move vertically from top to bottom and the end of the strip 17 is welded to the end of the following strip 17'. There is a sensor, not shown in the figures, the purpose of which is to signal to the machine when one of the strip coils 17 is running out, situated between the cylinder 19 and the cylinders 30 and 31. The cylinders 30 and 31 drive the jaws 34 and 35 with the piston rods 30a and 31a thereof. The jaws 34 and 35 are opposite the anvil 36 in the operating position thereof.

When the strip 17 runs out, the cylinder 39 receives the signal from the not shown sensor and blocks the strip 17 with the jaws 40 and 40', at the same time as the not shown sensor sends a signal to activate the cylinder 27.

The rod 26 of the cylinder 27 forces the arms 23 to move from the left to the right of the pin-joint 24. One of the arms is jointed to the shear 21, which moves in a substantially arcuate manner from right to left, as a result of being supported not only by the left arm 23, but also by the swinging arm 33 having its centre of rotation 32, with the shear 21 making a perfectly clean cut across the end of the strip 17, the remains of which are blown away by a jet of pressurised air or any other conventional or known means.

Thereafter, the cylinder 41, through the rod 42 driven by the piston 42b pulls the strip 17 down, since the cylinder 41 is connected to the cylinder 39 and the cylinder 39 has the strip 17 held between its jaws 40 and 40' until the cut upper end of the strip 17 is positioned in front of the nozzle 37. At this time, the cylinder 30 is operated to press the jaw 35 with its rod 30a, trapping the end of the strip 17 between the jaw 35 and the anvil 36, the lower portion of the strip 17 being released with the simultaneous withdrawal of the jaws 40 and 40', with the retraction of the rod 39a and piston 39b.

In order to be able to continue feeding the machine and to perform the welding operation, the operator manually pulls the free end of a new strip 17', feeding it through the jaws 18 and 18' of the cylinder 19, until it is detected by the not shown sensor and the jaws 18 and 18' immediately block the strip 17' and the shear 21 is operated again to make a clean cut across the strip 17' and blow away or otherwise remove the remains. Thereafter, the cylinder 41, by means of the column 14, pulls the cylinder 19 and the jaws 18 and 18' thereof downwardly, the latter having the new strip 17' trapped therebetween.

When the strip 17' is finally positioned in front of the jaws 34 and the anvil 36, these trap the strip 17', with the ends of 17 and 17' abutting, at which time the welding nozzle is operated to weld both ends of 17 and 17' across the full width thereof, it being possible to adjust the stroke of the nozzle 37 so as to be able to work with strips from 50 up to 250 mm wide.

After the ends of 17 and 17' have been welded, and after all the clamps have been released, the strip 17' moves towards the feed system of the corresponding press, thereby preventing the press from being stopped, with the corresponding throughput loss.

The combination of the cylinder 27 with the parallelogram formed by the pin-jointed arms 23 allows a double force to be applied to the shear 21, thereby avoiding heavy columns such as are used in the conventional systems which, apart from working with half the force, occupy a considerable space and prevent the machine from being mounted in any position.

Also, the combination of the parallelogram 23 with the shear 21 pin-jointed to said parallelogram, benefits from all the force provided by the latter on assuring the shear 21 over the swinging arm 33 with the axis of rotation 32, whereby the shearing operation may be carried out on different thicknesses of metal strip 17 without the cleanness of the cut being spoiled as a result of such thickness.

## Claims

1. A metal strip welding machine, for welding the ends of said metal strips (17, 17') being unwound from coils, comprising: a frame (12); strip (17, 17') entraining means (19, 39); strip (17, 17') shearing means (21); strip (17, 17') end blocking means (30, 31, 36) and welding means for said strip (17, 17') ends, where said strip (17, 17') entraining means comprises: a first pair of opposite jaws (18, 18') for retentively trapping said strip (17, 17'); a first cylinder (19) for moving one jaw (18) of said first pair against the other jaw (18') of the same pair; a second pair of opposite jaws (40, 40') for retentively trapping said strip (17, 17'); a second cylinder (39) for moving one jaw (40) of said second pair against the other jaw (40') of the same pair; a column (14) fixedly attached to each of said first and second cylinders (19, 39); **characterised in that** said strip (17, 17') entraining means comprises a third cylinder (41) for moving said first and second cylinders (19 and 39) in a direction to feed said strips (17, 17') forward, and **in that** said shearing means for the ends of the strips (17, 17') comprises: a fourth cylinder (27) having a rod (26); a flat bar (25); at least one articulated parallelogram, having arms (23) forming an upper apex, a lower apex and lateral apexes, said lower apex moving integrally with said rod (26) and said upper apex being immovably attached to said flat bar (25); and a shear (21) moving integrally with one of said lateral apexes and having a contour (21a), where said fourth cylinder (27) is associated with said frame (12) through an appendix (44) and a lever (43).

2. The machine of claim 1, **characterised in that** it is mounted on a stand (11), on which there is mounted said frame (12), said means being supported on said stand (11) and/or said frame (12).

3. The machine of claim 1, **characterised in that** it is provided with a swinging arm (33) fixedly attached at one end thereof to said shear (21); the movement of said arm (33) being suitable for aiding in the movement of said shear (21).

4. The machine of claim 1, **characterised in that** said strip (17, 17') end blocking means comprises: a first anvil (36) for engagement with respective end regions of said strips (17, 17'); a jaw (35); a fifth cylinder (30) suitable for moving said jaw (35) towards said primer anvil (36), trapping an end region of one strip (17); a jaw (34); and a sixth cylinder (31) suitable for moving said jaw (34) towards said first anvil (36), trapping an end region of the other strip (17'); said first anvil (36) allowing said welding nozzle (37) to operate on said strip (17, 17') ends, joining them together.

5. The machine claim 3, **characterised in that** it is provided with a second anvil (46) mounted on said frame (12) and which is provided at the lower end thereof with a contour (46a) substantially complementary to said contour (21a) of said shear (21).

6. The machine of claim 1, **characterised in that** said welding means for welding said ends of said strips (17, 17') comprise: a flat bar (47) attached to said frame (12), said flat bar (47) having means for moving a welding nozzle (37) such that it runs along the joint between said sheets (17, 17'), welding them together.

## Patentansprüche

1. Metallband-Schweißmaschine zum Schweißen der Enden der von Spulen abgewickelten Metallbänder (17, 17') mit: einem Rahmen (12); einer Bänder (17, 17') mitführenden Einrichtung (19, 39); einer Bänder (17, 17') scherenden Einrichtung (21); einer Enden der Bänder (17, 17') blockierenden Einrichtung (30, 31, 36) und einer Schweißeinrichtung für die Enden der Bänder (17, 17'), wobei die Bänder (17, 17') mitführende Einrichtung aufweist: ein erstes Paar gegenüberliegende Backen (18, 18'), um das Band (17, 17') fest einzuklemmen; einen ersten Zylinder (19), um eine Backe (18) des ersten Paares gegen die andere Backe (18') des gleichen Paares zu bewegen; ein zweites Paar gegenüberliegende Backen (40, 40'), um das Band (17, 17') fest einzuklemmen; einen zweiten Zylinder (39), um eine Backe (40) des zweiten Paares gegen die andere Backe (40') des gleichen Paares zu bewegen; eine Säule (14), die an jedem der ersten und zweiten Zylinder (19; 39) fest angebracht ist; **dadurch gekennzeichnet, daß** die Bänder (17, 17') mitführende Einrichtung einen dritten Zylinder (41) aufweist, um den ersten und zweiten Zylinder (19 und 39) in einer Richtung zum Vorrücken der Bänder (17, 17') zu bewegen, und die Schereinrichtung für die Enden der Bänder (17, 17') aufweist: einen vierten Zylinder (27) mit einer Stange (26); einen flachen Stab (25); zumindest ein angelenktes Parallelogramm mit Armen (23), die einen oberen Scheitel, einen unteren Scheitel und seitliche Scheitel bilden, wobei sich der untere Scheitel integral mit der Stange (26) bewegt und der obere Scheitel am flachen Stab (25) unbeweglich angebracht ist; und eine Schere (21) die sich integral mit einem der seitlichen Scheitel bewegt und eine Kontur (21a) hat, wobei der vierte Zylinder (27) durch ein Ansatzstück (44) und einen Hebel (43) mit dem Rahmen (12) verbunden ist.

2. Maschine nach Anspruch 1, **dadurch gekennzeichnet, daß** sie auf einem Ständer (11) montiert ist, auf dem der Rahmen (12) montiert ist, wobei die Einrichtung auf dem Ständer (11) und/oder dem Rahmen (12) getragen wird.

3. Maschine nach Anspruch 1, **dadurch gekennzeichnet, daß** sie mit einem Schwenkarm (33) versehen ist, der an einem seiner Enden mit der Schere (21) verbunden ist; wobei die Bewegung des Arms (33) zum Unterstützen bei der Bewegung der Schere (21) geeignet ist.

4. Maschine nach Anspruch 1, **dadurch gekennzeichnet, daß** die Bandenden (17, 17') blockierende Einrichtung aufweist: einen ersten Amboß (36) für einen Eingriff mit jeweiligen Endbereichen der Bänder (17, 17'); eine Backe (35); einen fünften Zylinder (30), der dafür geeignet ist, die Backe (35) in Richtung auf den Amboß (36) zu bewegen, wobei ein Endbereich eines Bandes (17) eingeklemmt wird; eine Backe (34); und einen sechsten Zylinder (31), der dafür geeignet ist, die Backe (34) in Richtung auf den ersten Amboß (36) zu bewegen, wobei ein Endbereich des anderen Bandes (17') eingeklemmt wird; wobei der erste Amboß (36) ermöglicht, daß die Schweißdüse (37) auf den Bandenden (17, 17') arbeitet, wobei sie diese miteinander verbindet.

5. Maschine nach Anspruch 3, **dadurch gekennzeichnet, daß** sie mit einem zweiten Amboß (46) versehen ist, der am Rahmen (12) befestigt ist und an seinem unteren Ende mit einer Kontur (46a) versehen ist, die zur Kontur (21a) der Schere (21) im wesentlichen komplementär ist.

6. Maschine nach Anspruch 1, **dadurch gekennzeichnet, daß** die Schweißeinrichtung zum Schweißen der Enden der Bänder (17, 17') aufweist: einen flachen Stab (47), der am Rahmen (12) angebracht ist, wobei der flache Stab (47) eine Einrichtung aufweist, um eine Schweißdüse (37) so zu bewegen, daß sie entlang der Verbindung zwischen den Blechen (17, 17') läuft, wobei sie diese zusammenschweißt.

## Revendications

1. Machine de soudage de bandes métalliques, destinée au soudage des extrémités de bandes métalliques (17, 17') qui sont déroulées de bobines, comprenant un bâti (12), un dispositif (19, 39) d'entraînement de bande (17, 17'), un dispositif (21) de cisaillage de bande (17, 17'), des dispositifs (30, 31, 36) de blocage d'extrémité de bande (17, 17') et un dispositif de soudage des extrémités de bande (17, 17'), le dispositif de d'entraînement de bande (17, 17') comprenant une première paire de mâchoires opposées (18, 18') destinées à retenir la bande (17, 17') en la retenant, un premier vérin (19) destiné à déplacer une première mâchoire (18) de la première paire contre l'autre mâchoire (18') de la même paire, une seconde paire de mâchoires opposées (40, 40') destinées à retenir la bande (17, 17'), un second vérin (39) destiné à déplacer la première mâchoire (40) de la seconde paire contre l'autre mâchoire (40') de cette paire, et une colonne (14) fixée à chacun des premier et second vérins (19, 39), **caractérisée en ce que** le dispositif d'entraînement de bande (17, 17') comporte un troisième vérin (41) destiné à déplacer les premier et second vérins (19 et 39) en direction d'avance des bandes (17, 17'), et **en ce que** le dispositif de cisaillage des extrémités des bandes (17, 17') comporte un quatrième vérin (27) ayant une tige (26), une barre plate (25), au moins un parallélogramme articulé ayant des bras (23) formant un sommet supérieur, un sommet inférieur et des sommets latéraux, le sommet inférieur se déplaçant en coopération avec la tige (26) et le sommet supérieur étant fixé à la barre plate (25) sous forme immobile, et une cisaille (21) se déplaçant solidairement avec l'un des sommets latéraux et ayant un contour (21a), le quatrième vérin (27) étant associé au bâti (12) par un accessoire (44) et un levier (43).

2. Machine selon la revendication 1, **caractérisée en ce qu'**elle est montée sur un socle (11) sur lequel est monté le bâti (12), ledit dispositif étant supporté sur le socle (11) et/ou le bâti (12).

3. Machine selon la revendication 1, **caractérisée en ce qu'**elle comporte un bras pivotant (33) fixé à une première extrémité à la cisaille (21), le mouvement du bras (33) étant utile pour faciliter le déplacement de la cisaille (21).

4. Machine selon la revendication 1, **caractérisée en ce que** le dispositif de blocage d'extrémité de bande (17, 17') comporte une première enclume (36) destinée à coopérer avec des régions respectives d'extrémité des bandes (17, 17'), une mâchoire (35), un cinquième vérin (30) destiné à déplace la mâchoire (35) vers l'enclume principale (36) en retenant une région d'extrémité d'une bande (17), une mâchoire (34) et un sixième vérin (31) destiné à déplacer la mâchoire (34) vers la première enclume (36) en retenant une région d'extrémité de l'autre bande (17'), la première enclume (36) permettant au chalumeau de soudage (37) de travailler sur les extrémités de bande (17, 17') et de les raccorder.

5. Machine selon la revendication 3, **caractérisée en ce qu'**elle comporte une seconde enclume (46) montée sur le bâti (12) et qui a, à son extrémité inférieure, un contour (46a) pratiquement complémentaire du contour (21a) de la cisaille (21).

6. Machine selon la revendication 1, **caractérisée en ce que** le dispositif de soudage des extrémités des bandes (17, 17') comporte une barre plate (47) fixée au bâti (12), cette barre plate (47) ayant un dispositif de déplacement d'un chalumeau de soudage (37) afin qu'il se déplace le long du joint placé entre les feuilles (17, 17') et les soude.
